Europäisches Patentamt

European Patent Office

Office européen des brevets

(11) Veröffentlichungsnummer: **0 147 571**

**B1**

(12) **EUROPÄISCHE PATENTSCHRIFT**

(45) Veröffentlichungstag der Patentschrift:
25.10.89

(21) Anmeldenummer: **84113256.6**

(22) Anmeldetag: **03.11.84**

(51) Int. Cl.⁴: **B 29 C 45/00,** B 29 C 45/16

(54) Werkzeug zum Spritzgiessen von Gegenständen aus Kunststoff.

(30) Priorität: **05.11.83 DE 3340122**

(43) Veröffentlichungstag der Anmeldung:
**10.07.85 Patentblatt 85/28**

(45) Bekanntmachung des Hinweises auf die Patenterteilung:
**25.10.89 Patentblatt 89/43**

(84) Benannte Vertragsstaaten:
**AT BE CH DE FR GB IT LI LU NL SE**

(56) Entgegenhaltungen:
**DE-A-1 941 479
DE-A-2 063 850
DE-A-3 213 256
FR-A-1 299 327
FR-A-2 277 542
US-A-3 263 013**

(73) Patentinhaber: **Fickenscher & Co. GmbH Werkzeug- und Formenbau, Sedanstrasse 5, D-8672 Selb (DE)**

(72) Erfinder: **Meyer, Herbert, Ringstrasse 1, D-8672 Selb (DE)**
Erfinder: **Krause, Reinhard, Rosenstrasse 8, D-8591 Brand bei Marktredwitz (DE)**

(74) Vertreter: **Patentanwälte Czowalla . Matschkur + Partner, Dr.- Kurt- Schumacher- Strasse 23 Postfach 9109, D-8500 Nürnberg 11 (DE)**

## Beschreibung

Die Erfindung richtet sich auf ein Werkzeug zum Spritzgießen von Gegenständen aus wenigstens zwei selbstständigen, fest, aber gegeneinander beweglich verbundenen Teilen aus ggf. verschiedenartigen Kunststoffen, wobei das zuvor gefertigte Teil ein Bestandteil des Werkzeugs für das nachfolgend zu fertigende Teil bildet und der Gegenstand im Takt von einem Formnest zum nachfolgenden transportiert wird. Solche Teile können um eine Achse gegeneinander beweglich sein, also etwa verschiebbar zueinander sein. Es kommen allerdings auch Bewegungen mit mehr Achsen in Betracht, vorzugsweise bei Gelenkverbindungen. Die gegeneinander beweglichen Teile können aus dem gleichen Kunststoff bestehen oder auch aus gleichen Kunststoffen unterschiedlicher Parameter. Es kommen aber auch Kombinationen von verschiedenen Kunststoffen in Betracht.

Es gibt eine Vielzahl von Gebrauchsgegenständen, die im Wege des Spritzgießens aus den unterschiedlichsten Kunststoffen gefertigt werden, darunter auch solche, die aus mehreren beweglich miteinander verbundenen Teilen bestehen, wobei es sich sowohl um Gelenkverbindungen, um eine Achse wirkende Drehbewegungen, lineare Bewegungen oder auch andere, zum Teil sehr komplexe Bewegungen der Teile gegeneinander handeln kann. Diese Teile werden einzeln gefertigt, in aufwendigen manuellen oder automatischen Arbeitsvorgängen einander zugeordnet und montiert. Der zur Montage der Teile erforderliche Arbeitsaufwand übersteigt den Aufwand zur Fertigung der Teile mitunter beträchtlich. Zur Minderung der Herstellungskosten hat man deshalb versucht, Gegenstände aus mehreren gegeneinander beweglichen Teilen in einem Arbeitsvorgang zu fertigen. Dieses Problem wurde gelöst durch die Verwendung verschiedener Werkstoffe mit unterschiedlichen thermischen Eigenschaften, insbesondere verschiedenem Schwingungsverhalten. Zunächst wurde ein inneres Teil aus dem einen Werkstoff gespritzt und anschließend das dieses innere Teil zumindest teilweise, nämlich im Bereich der beweglichen Verbindung, umschließende äußere Teil um das innere Teil gespritzt. Man verwendet hierzu einen Werkstoff hoher Schwindung für das innere Teil und einen solchen von geringerer Schwindung für das äußere Teil, so daß ein ausreichender Spielraum zwischen beiden Teilen verbleibt, der die Beweglichkeit versichert. Zum anderen kommen hierfür Kunststoffe mit verschiedener Verarbeitungstemperatur in Betracht. Die Auswahl für dieses Verfahren geeigneter unterschiedlicher Werkstoffe bereitet mitunter Schwierigkeiten bezüglich der an einen herzustellenden Gegenstand gestellten weiteren Anforderungen. Außerdem wird das Spritzgießverfahren und die zu seiner Durchführung dienende Vorrichtung durch die Verwendung unterschiedlicher Werkstoffe mit verschiedenen thermischen Eigenschaften recht kompliziert. Das Bemühen der Fachwelt richtet sich nunmehr auf eine Vervollkommnung, Vereinfachung und Verbilligung des Verfahrens zum Spritzgießen von Gegenständen mit wenigstens zwei selbständigen, beweglich miteinander verbundenen Teilen unter weitgehender Verminderung der Abhängigkeit von verschiedenen Werkstoffen und vor allem unter dem Gesichtspunkt der Vereinfachung der Formtechnik.

Es ist aus der EU-Patentanmeldung 8 210 738.0 bekannt, eine Tube aus Kunststoff mit zugehöriger Verschlußkappe in einer Form zu spritzen. Unmittelbar nach dem Spritzen des Tubenkörpers werden bestimmte Formteile der Spritzform entfernt und durch andere ersetzt und danach die Verschlußkappe gespritzt, wobei der Gewindehals der Tube gewissermaßen als Formkern wirkt. Allerdings sind hierbei die beiden Teile lösbar und nicht unlösbar fest miteinander verbunden. Diese Vorrichtung verlangt eine komplizierte und aufwendige Form. Darüber hinaus bereitet es Schwierigkeiten, zwischen den beiden in zeitlichem Abstand nacheinander erfolgenden Spritzvorgängen die von dem die Tube bildenden Werkstoff stammende Wärme soweit abzuführen, daß ein oberflächlicher Stoffschluß zwischen den beiden Werkstoffen mit Sicherheit ausgeschlossen wird. Ein anderes vorbekanntes Verfahren (DE-OS-2 530 475) befaßt sich mit der Herstellung von Gegenständen aus zwei fest und unlösbar, aber gegeneinander beweglichen Teilen. Dieses Verfahren bedient sich obligatorisch verschiedener thermoplastischer Kunststoffe mit unterschiedlicher Verarbeitungstemperatur, wobei wieder zwischen beiden Einspritzvorgängen ein der hinreichenden Aushärtung des zuerst gefertigten Teils dienender zeitlicher Abstand liegt. Da sich der gesamte Vorgang in ein und derselben Form abspielt, ist die Leistungsfähigkeit dieses Verfahrens begrenzt. Auch in diesem Fall ist eine aufwendige Form erforderlich, und durch die nach dem Spritzen des ersten Teils aus der Form zu entfernenden Kerne oder Schieber verbleiben an der Oberfläche des Endprodukts störende Grate.

Die gattungsbildende US-A-3 263 013 offenbart zwei im Wege des Spritzgießens hergestellte und gegeneinander bewegliche Teile. Hierbei wird der zweite Teil um den vorgefertigten ersten Teil herumgespritzt. Der erste Teil ist mit einem Anguß versehen, der aus zwei Stegen und einem Ring besteht, der auf einer Transportstange der Form befestigt ist, deren axiale Bewegung den fertiggestellten ersten Spritzteil in die mittlere Kühlstellung der Form und anschließend in die untere Position in der Form verbringt, welcher nachfolgend der zweite Teil an den vorgefertigten ersten Teil angespritzt wird. Dieser zweite Teil weist einen eigenen Anguß auf, wiederum aus zwei Stegen und einem Ring auf der Transportstange bestehend. Die Angußstege müssen am Ende des Formvorgangs von den beiden Spritzteilen abgetrennt werden, wobei jedoch noch die Ringe auf der Transportstange verbleiben und eigens von dieser abgestreift werden müssen, erst dann kann die Transportstange in der entgegengesetzten axialen Bewegung in die Ausgangsstellung zurückgeführt werden, um einen neuen Spritzzyklus einzuleiten. Dieses Verfahren ist recht unrationell, denn bei jedem Zyklus kann in mehreren Takten lediglich ein einziges Verbindungselement gefertigt werden, obwohl durch dieses vorbekannte Verfahren Gelenkverbindungen zwischen zwei Spritzgießteilen gefertigt werden können. Das Verfahren geht aus von Kunststoffen mit unterschiedlichem Schmelzpunkt, um ein Anhaften der in zeitlichem Abstand voneinander gefertigten Teile aneinander zu vermeiden. Gleichwohl befriedigt diese vorbekannte Arbeitsweise noch nicht. Sie ist nicht nur unrationell, sondern läßt auch keine weiteren Abwandlungen zu.

Die Erfindung bemüht sich um die Lösung dieses Problems unter Vermeidung der sich aus den vorbekannten Verfahren und Vorrichtungen ergebenden Nachteilen. Sie erreicht dies bei einem Werkzeug der eingangs bezeichneten Art dadurch, daß das zuvor gefertigte Teil eine hinterschnittene Ausnehmung zum Einspritzen des Werkstoffs für das nachfolgend zu fertigende Teil aufweist, daß das Werkzeug eine der Anzahl der zu fertigenden gegeneinander beweglichen Teile, Teilpaare oder Teilgruppen entsprechende Anzahl von Formnestern aufweist und daß um das Werkzeug eine der Anzahl der Formnester entsprechende Anzahl von aus den Formnestern aushebbaren selbständigen Halterungen für den Spritzling angeordnet ist, die von einem Formnest zum anderen um das Werkzeug bewegbar sind. Aus dem letzten Formnest wird schließlich nach seinem Öffnen der fertiggestellte Gegenstand entnommen und abgeworfen.

Es liegt auf der Hand, daß mit dem erfindungsgemäßen Werkzeug hergestellte Gegenstände zwei oder praktisch beliebig viele gegeneinander bewegliche Teile oder Teilegruppen aufweisen können und daß jeweils zwei oder auch mehrere bewegliche Teile des Gegenstands in ein und demselben Arbeitstakt gefertigt werden können, was jedoch eine Vervielfachung des auf der Verwendung des erfindungsgemäßen Werkzeugs beruhenden einfachen Grundprinzips darstellt. Das verhältnismäßig schwere Werkzeug steht bei der erfindungsgemäßen Ausgestaltung fest, und es sind lediglich die Halterungen für den Spritzling/die Spritzlinge um das Werkzeug bewegbar, so daß in einem solchen Fall ein und dieselbe Halterung ein und denselben Spritzling vom ersten bis zum letzten Arbeitstakt tragen und vom einen Formnest zum anderen führen kann.

Die Erfindung umfaßt darüber hinaus auch die gewissermaßen entgegengesetzte Alternative in der Weise, daß, wiederum bei einem Werkzeug der eingangs bezeichneten Art das Formnest in an sich bekannter Weise hinterschnittene Ausnehmungen zur Aufnahme des zuvor gefertigten Teils aufweist, daß das Werkzeug eine der Anzahl der zu fertigenden gegeneinander beweglichen Teile, Teilpaare und Teilgruppen entsprechend der Anzahl von Formnestern aufweist und daß um das Werkzeug eine der Anzahl der Formnester entsprechende Anzahl von aus den Formnestern aushebbaren selbständigen Halterungen für den Spritzling angeordnet ist, die von einem Formnest zum nächsten um das Werkzeug bewegbar sind. Die bewegliche Verbindung zweier oder mehrerer Teile kann damit nicht nur dadurch bewirkt werden, daß der nachfolgende Teil den vorher gefertigten Teil umspritzt, sondern auch in der Weise, daß der nachfolgende Teil in eine entsprechende Ausnehmung des vorher gefertigten eingespritzt wird. Gerade in diesen beiden Alternativen offenbart sich der große Vorteil der Vielseitigkeit dieses Werkzeugs.

Die Entnahme des im Wege des Spritzgießens gefertigten jeweiligen Teils aus dem Formnest begünstigt einerseits die Wärmeabführung aus der Form und andererseits die Verfestigung des jeweiligen Spritzlings, so daß dieser, sobald er in das nächste Formnest verfrachtet worden ist, bereits soweit verfestigt ist, daß nach Schließen des Werkzeugs ohne jede zeitliche Verzögerung sofort ein neuer Spritzvorgang stattfinden kann. Zur gleichen Zeit steht aber auch das vorhergehende Formnest für einen neuen Arbeitsgang zur Verfügung. Bei nur zweiteiligen Gegenständen sind zwei aufeinanderfolgende Formnester erforderlich, bei entsprechend mehr im Wege des Spritzgießens miteinander zu verbindenden Teilen oder Teilegruppen steigt die Zahl der notwendigen Formnester. Von besonderer Bedeutung ist in diesem Zusammenhang, daß in jedem der auf das erste Formnest folgenden weiteren Formnest des Werkzeugs gleichzeitig zwei oder mehrere Teile des Gegenstands gefertigt werden können. Die aufeinanderfolgenden Formnester sind um die dem jeweils anschließend zu fertigenden Teil entsprechende Formausnehmungen erweitert, und gleichzeitig ist eine Formvertiefung oder, was technisch nichts anderes ist, Hinterschneidung des zuvor gefertigten Teils bzw. der zuvor gefertigten Teile zur Aufnahme des nunmehr einzuspritzenden Kunststoffs vorgesehen.

Die Auswahl der verwendeten Kunststoffe nach ihrem thermischen Verhalten, nämlich vorzugsweise ihrer Verarbeitungstemperatur und die Verarbeitung an der unteren Toleranzgrenze des eine Verarbeitung des jeweiligen Kunststoffs zulassenden Temperaturbereichs ermöglicht es vor allem dann, wenn der für das zuerst gefertigte Teil verwendete Werkstoff kurzzeitig thermisch noch belastbar ist, daß die Fertigung des zweiten Teils, zu dessen Ausbildung das erste Teil ganz oder teilweise die Form bildet, ohne Beeinträchtigung des zuerst gefertigten Teils durchzuführen. Beide Teile verschmelzen oder versintern nicht gegeneinander, sondern behalten ihre Selbständigkeit und ihre Beweglichkeit gegeneinander. Gegenüber dem Verfahren durch Umspritzen eines erstgefertigten Teils hat das Einspritzen eines weiteren Teils in eine Formausnehmung eines zuerst gefertigten Teils den unübersehbaren Vorteil, daß das zuletzt gefertigte Teil durch seine Schwindung sich gewissermaßen noch von dem zuvor gefertigten Teil entfernt und damit den für die Beweglichkeit der beiden Teile gegeneinander erforderlichen Spielraum auf diese Weise zuverlässig gewährleistet. Dieser Vorzug erhöht sich dann noch beträchtlich, wenn man hierzu, wie dies die Erfindung ermöglicht, zur Fertigung beider Teile ein und denselben Werkstoff verwenden kann. Es ergibt sich auf diese Weise eine außerordentlich hohe Qualität der Beweglichkeit beider Teile gegeneinander, was das Anwendungsgebiet des erfindungsgemäßen Verfahrens bezüglich der Auswahl der danach herzustellenden Gegenstände beträchtlich erweitert. Bei Scharnieren z. B. lassen sich in einem Arbeitsvorgang und in einem Werkzeug die Scharnierhälften und, soweit erforderlich, ein sie verbindendes Element, z. b. ein Scharnierstift, ohne zusätzlichen Montageaufwand herstellen. So lassen sich leicht auch Kupplungen, z. B. zwischen einer Welle und einem Rad, ebenso fertigen wie die verschiedensten Bauteile für die Elektrotechnik, wobei nur beispielsweise Dreh- und Kippschalter genannt werden. Ebenso sind alle üblichen Bolzen- oder Nietverbindungen zwischen zwei beweglichen Teilen mit diesen Teilen selbst in einem Arbeitsvorgang und in demselben Werkzeug herzustellen, desgleichen Kugellager, deren Lagerkörper in einem Käfig untergebracht sind. Ein weiteres Anwendungsgebiet sind aus mehreren beweglich gegeneinander bestehenden Teilen zusammengesetzte Spielzeugfiguren, deren Einzelelemente bisher zum größten Teil einzeln gefertigt und anschließend in einem aufwendigen und kostspieligen Arbeitsverfahren zusammenmontiert werden mußten. Es spielt hierbei keine ausschlaggebende Rolle, ob die einzelnen Teile einfach oder komplizierter zu fertigen sind, beispielsweise aus zwei oder mehreren unterschiedlich gefärbten Kunststoffen bestehen. Die hohe Qualität der Beweglichkeit der beiden Teile gegeneinander beruht zum Teil darauf, daß zumindest das zuletzt gefertigte Teil an seiner Berührungsfläche gegenüber dem zuerst gefertigten Teil keine Formtrenn-Naht aufweist, da in diesem Bereich das zuerst gefertigte Teil einen Bestandteil der Form bildet. Die Bandbreite der für das Verfahren verwendbaren Kunststoffe ist außerordentlich hoch. Unter anderem kommen die verschiedensten Polyamide zu seiner Anwendung ebenso in Betracht, wie Polypropylene oder auch Polyacetale. Arbeitet man an der unteren Grenze der Verarbeitungstemperatur der verwendeten Werkstoffe, so ist der zuerst gefertigte Werkstoff, wenn er mit dem Werkstoff des anschließend gefertigten Teils in Berührung kommt, bereits derart verfestigt, daß eine stoffschlüssige Verbindung zwischen den beiden Teilen nicht mehr eingegangen wird. Ggf. können die zur Verarbeitung gelangenden Kunststoffe noch mit Additiven versehen werden, die die Gleitfähigkeit der beiden Teile verbessern. Welcher der beiden Teile ganz oder teilweise in den anderen Teil eingespritzt wird oder welcher zum Umspritzen des anderen Teils dient, richtet sich ebenso nach den Umständen des Einzelfalls, wie die Auswahl des jeweiligen Verfahrens, nämlich des Einspritzens oder Umspritzens eines anderen Teils. Maßgeblich hierfür ist vor allem auch die Formgebung der miteinander zu verbindenden Teile.

Die Erfindung schlägt außerdem ein Werkzeug zur Durchführung des vorgenannten Verfahrens vor, wobei das Werkzeug eine der Anzahl der zu fertigenden Teile, Teilpaare oder Teilgruppen entsprechende Zahl von Formnestern aufweist, denen je eine gleiche aus dem geöffneten Werkzeug aushebbare Halterung für den Spritzling zugeordnet ist, wobei die Halterungen von einem Formnest zum folgenden um das Werkzeug bewegbar angeordnet sind. Eine bevorzugte Ausführungsform der Erfindung sieht die Anordnung der Halterungen auf einem um das Werkzeug verfahrbaren Drehtisch vor.

In weiterer Ausgestaltung der Erfindung kann in beiden von der Erfindung umfaßten Varianten die Halterung an einem um das Werkzeug verfahrbaren Drehtisch angeordnet sein, und es können schließlich - in weiterer Ausgestaltung der Erfindung - in wenigstens einem der auf das erste Formnest folgenden Formnester zwei oder mehrere hinterschnittene Ausnehmungen zum gleichzeitigen Fertigen zwei oder mehrerer weiterer Teile des Gegenstands angeordnet seien.

Weitere Einzelheiten und Vorteile ergeben sich aus der Beschreibung einer in der Zeichnung dargestellten und die Verfahrensweise lediglich beispielhaft erläuternden Ausführungsform.

In der Zeichnung ist die Draufsicht auf die Unterseite eines karussellartig ausgebildeten Werkzeugs 1 dargestellt, dessen Oberseite abgenommen und, da entbehrlich, nicht wiedergegeben ist. In dem feststehenden Teil 2 des Werkzeugs 1 sind vier Formnester 3, 4, 5, 6 vorgesehen, die den bei dieser beispielsweisen Ausführungsform des Verfahrens erforderlichen vier Stationen der Fertigung entsprechen. Das Werkzeug 1 weist vier gleich ausgebildete Halterungen 7 auf, die aus der Ebene des Werkzeugs 1 nach oben aushebbar sind und an den beiden Stiften 8 das Werkstück 9 tragen. In der Station I, links im Bild, wird beispielsweise der Körper 10 einer Spielzeugfigur gespritzt, die eine sacklochartige Formausnehmung 11 zur späteren Aufnahme des Kopfes 12 der Figur und beidseitig der Schultern Zapfen 13 zur gelenkigen Anbringung der Arme 14 aufweist. Ist der den Körper 10 bildende Spritzling fertiggestellt, wird die (nicht dargestellte) obere Werkzeughälfte abgenommen und durch Anheben der Halterung 7 der Spritzling aus dem Formnest 3 entnommen. Daraufhin wird der durch das Antriebsrad 15 bewirkte Antrieb des Drehtisches 16 eingeschaltet. Der Drehtisch 16 bewegt die den Spritzling 9 tragende Halterung 7 in die Stellung der Station II, unten in der Zeichnung. Danach wird die Halterung 7 wieder abgesenkt und der Spritzling in das Formnest 4 eingelegt. Hier wird der aus dem gleichen oder einem anderen Werkstoff bestehende Kopf 12 gespritzt, wobei der Ansatzzapften 17 des Kopfes 12 in die Formausnehmung 11 des Spritzlings 9 eingreift. Der Spritzling ist auf dem Wege der Station I zur Station II bereits soweit verfestigt, daß der den Kopf 12 bildende Werkstoff keine stoffschlüssige Verbindung mit dem den Körper 10 bildenden Spritzling 9 eingeht, vielmehr eine einwandfreie Drehbewegung zwischen dem in die Ausnehmung 11 eingespritzten Zapfen 17 und dem die Ausnehmung 11 aufweisenden Teil 10 ermöglicht wird. Nach diesem Vorgang hebt wiederum die Halterung 7 den Spritzling aus, der Drehtisch 16 verfährt die Halterung 7 um 90° in die Station III, rechts im Bild. In dieser wird der Kopf 12 der Figur durch Anspritzen eines anderen oder anders gefärbten Teils aus dem gleichen Kunststoff vervollständigt.

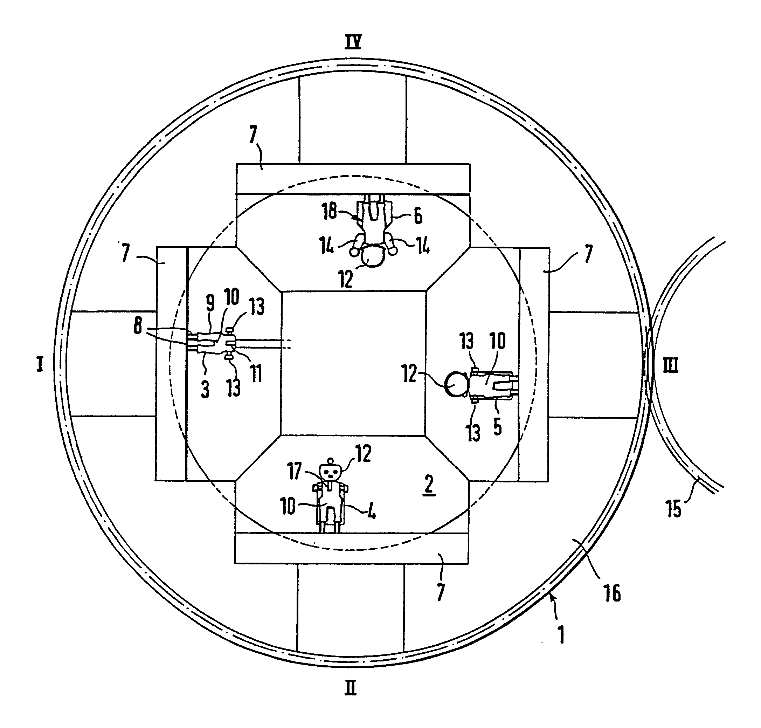

In der vorher erläuterten Weise wird der Spritzling nunmehr in die Station IV, oben im Bild, verbracht, und nach Schließen des Werkzeugs werden die Arme 14 aus dem gleichen Kunststoff, aus dem zumindest der Körper 10 besteht, gefertigt, wobei der Kunststoff die Zapfen 13 des Körpers 10 umspritzt, so daß gleichzeitig zwei gegenüber dem Körper 10 selbständige Teile, nämlich die Arme 14, in drehbarer, aber fester Verbindung gegenüber dem Körper 10 entstehen. Im Bereich der Station IV oder auf dem Wege von dieser zur nachfolgenden Station I wird die fertiggestellte Figur 18 von der Halterung 7 abgeworfen. Alle vier Stationen des Werkzeugs 1 arbeiten ständig gleichzeitig, so daß sich gleichzeitig vier Figuren in der Fertigung befinden, die bei diesem Ausführungsbeispiel vier gegeneinander bewegliche Teile aufweisen, nämlich den Kopf 12 und die beiden Arme 14 gegenüber dem Körper. Unter dem Begriff "fest miteinander verbundene Teile" ist zu verstehen, daß diese durchaus auch lösbar aneinander angeordnet sein können. In jedem Fall ist aber eine feste Verbindung zwischen den Teilen vorgesehen, die allerdings auch unlösbar sein kann. Die miteinander verbundenen Teile sind jedoch selbständig und infolgedessen beweglich gegeneinander.

Zur Herstellung der Gegenstände im Wege des Spritzgießens dienen bevorzugt sog. Heißläuferformen, die ohne Anguß arbeiten.

**Patentansprüche**

1. Werkzeug zum Spritzgießen von Gegenständen aus wenigstens zwei selbständigen, fest, aber gegeneinander beweglich verbundenen Teilen aus ggf. verschiedenartigen Kunststoffen, wobei das zuvor gefertigte Teil ein Bestandteil des Werkzeugs für das nachfolgend zu fertigende Teil bildet und der Gegenstand im Takt von einem Formnest zum nachfolgenden transportiert wird, dadurch gekennzeichnet, daß das zuvor gefertigte Teil eine hinterschnittene Ausnehmung zum Einspritzen von Werkstoff für das nachfolgend zu fertigende Teil aufweist, daß das Werkzeug (1) eine der Anzahl der zu fertigenden gegeneinander beweglichen Teile, Teilpaare oder Teilgruppen entsprechende Anzahl von Formnestern (3, 4, 5, 6) aufweist und daß um das Werkzeug (1) eine der Anzahl der Formnester (3, 4, 5, 6) entsprechende Anzahl von aus den Formnestern (3, 4, 5, 6) aushebbaren selbständigen Halterungen (7) für den Spritzling (9) angeordnet ist, die von einem Formnest zum nächsten um das Werkzeug (1) bewegbar sind.

2. Werkzeug zum Spritzgießen von Gegenständen aus wenigstens zwei selbständigen, fest, aber gegeneinander beweglich verbundenen Teilen aus ggf. verschiedenartigen Kunststoffen, wobei das zuvor gefertigte Teil ein Bestandteil des Werkzeugs für das nachfolgend zu fertigende Teil bildet und der Gegenstand im Takt von einem Formnest zum nachfolgenden transportiert wird, dadurch gekennzeichnet, daß das Formnest (4, 5, 6) in an sich bekannter Weise hinterschnittene Ausnehmungen zur Aufnahme des zuvor gefertigten Teils aufweist, daß das Werkzeug (1) eine der Anzahl der zu fertigenden gegeneinander beweglichen Teile, Teilpaare oder Teilgruppen entsprechende Anzahl von Formnestern (3, 4, 5, 6) aufweist und daß um das Werkzeug (1) eine der Anzahl der Formnester entsprechende Anzahl von aus den Formnestern aushebbaren selbständigen Halterungen (7) für den Spritzling (9) angeordnet ist, die von einem Formnest zum nächstem um das Werkzeug (1) bewegbar sind.

3. Werkzeug nach Anspruch 1 oder 2, dadurch gekennzeichnet, daß die Halterungen (7) an einem um das Werkzeug (1) verfahrbaren Drehtisch angeordnet sind.

4. Werkzeug nach Anspruch 1 oder 2, dadurch gekennzeichnet, daß in wenigstens einem der auf das erste Formnest (3) folgenden Formnester (4, 5, 6) zwei oder mehrere hinterschnittene Ausnehmungen zum gleichzeitigen Fertigen zweier oder mehrerer weiterer Teile des Gegenstandes angeordnet sind.

**Claims**

1. A tool for injection moulding objects made of at least two independent, rigidly but movably connected parts from optionally different kinds of plastics materials, the previously manufactured part forming a component of the tool for the part to be manufactured next, the object being transported in step from one mould nest to the next, characterised in that the previously manufactured part has an undercut recess for injecting material for the part to be manufactured next, in that the tool (1) has a number of mould nests (3, 4, 5, 6) corresponding to the number of parts, pairs or groups of parts which are to be manufactured and which are movable with respect to one another, and in that a number - corresponding to the number of mould nests (3, 4, 5, 6) - of independent supports (7) for the injection-moulded parts (9) are arranged around the tool, may be lifted out of the mould nests (3, 4, 5, 6), and are movable from one mould nest to the next around the tool (1).

2. A tool for injection moulding objects made of at least two independent, rigidly but movably connected parts from optionally different kinds of plastics materials, the previously manufactured part forming a component of the tool for the part to be manufactured next and the object being transported in step from one mould nest to the next, characterised in that the mould nest (4, 5, 6) has recesses undercut in a known manner for receiving the previously manufactured part, in that the tool (1) has a number of mould nests (3, 4, 5, 6) corresponding to the number of parts, pairs or groups of parts which are to be manufactured and which are movable with respect to one another, and in that a number - corresponding to the number of mould nests - of independent supports (7) for the injection-moulded parts (9) are arranged around the tool, may be lifted out of the mould nests end are movable from one mould nest to the next around the tool (1).

3. A tool according to claim 1 or 2, characterised in that the supports (7) are disposed on a rotary table which is capable of being moved around the tool (1).

4. A tool according to claim 1 or 2, characterised in that two or more undercut recesses for the simultaneous manufacture of two or more further parts of the object are provided in at least one of the mould nests (4, 5, 6) following the first mould nest (3).

## Revendications

1. Outil pour mouler par injection des objets constitués au moins de deux pièces indépendantes, solidaires mais mobiles l'une par rapport à l'autre, éventuellement en différentes matières synthétiques, la pièce fabriquée en premier lieu formant une partie intégrante de l'outil pour la pièce suivante à exécuter et l'objet étant transféré en cadence d'un nid de moulage au suivant, caractérisé en ce que la pièce exécutée en premier comporte un évidement à contre-dépouille pour l'injection du matériau pour la pièce à fabriquer par la suite, en ce que l'outil (1) comprend un nombre de nids de moulage (3, 4, 5, 6) correspondant au nombre de pièces, jeu de pièces ou groupes de pièces mobiles les unes par rapport aux autres, qui sont à exécuter, et qu'un nombre de fixations autonomes (7) pour la pièce moulée (9) susceptibles d'être extraites des nids de moulage (3, 4, 5, 6), correspondant au nombre de nids de moulage (3, 4, 5, 6), sont disposées autour de l'outil (1) et sont déplaçables d'un nid au suivant autour du moule (1).

2. Outil pour mouler par injection des objets constitués au moins de deux pièces indépendantes, solidaires mais mobiles l'une par rapport à l'autre, éventuellement en différentes matières synthétiques, la pièce fabriquée en premier lieu formant une partie intégrante de l'outil pour la pièce suivante à exécuter et l'objet étant transféré en cadence d'un nid de moulage au suivant, caractérisé en ce que le nid de moulage (4, 5, 6) comporte des évidements à contre-dépouille selon une manière connue en soi pour recevoir la pièce fabriquée en premier, en ce que l'outil (1) comprend un nombre de nids de moulage (3, 4, 5, 6) correspondant au nombre de pièces, jeux de pièces ou groupes de pièces mobiles les unes par rapport aux autres, qui sont à exécuter, et en ce qu'un nombre de fixations autonomes (7) pour la pièce moulée (9) susceptibles d'être retirées des nids de moulage et correspondant au nombre de nids de moulage, sont disposées autour de l'outil (1) et sont déplaçables d'un nid au suivant autour de l'outil (1).

3. Outil selon la revendication 1 ou 2, caractérisé en ce que les fixations (7) sont disposées sur une table tournante mobile autour de l'outil (1).

4. Outil selon la revendication 1 ou 2, caractérisé en ce que deux ou plusieurs évidements à contre-dépouille pour la fabrication simultanée de deux ou plusieurs autres pièces de l'objet sont ménagés dans au moins l'un des nids de moulage (4, 5, 6) succédant au premier nid de moulage (3).